# NEUE EUROPÄISCHE PATENTSCHRIFT

(11) **EP 0 124 739 B2**
(45) Veröffentlichungstag und Bekanntmachung des Hinweises auf die Entscheidung über den Einspruch: **23.06.1993**
(45) Hinweis auf die Patenterteilung: 10.09.1986
(21) Anmeldenummer: 84103266.7
(22) Anmeldetag: 24.03.1984
(51) Int. Cl.: H02J 7/04, H02J 7/10, F21L 9/00

(54) **Schaltungsanordnung zur kapazitätsabhängigen Nachladung eines Akkumulators**
Circuit arrangement for recharging a battery depending on its capacity
Circuit pour recharger un accumulateur en fonction de sa capacité

(30) Priorität: 08.04.1983 DE 3312600
(43) Veröffentlichungstag der Anmeldung: 14.11.1984
(73) Patentinhaber: CEAG Licht- und Stromversorgungstechnik GmbH, D-4770 Soest (DE)
(72) Erfinder: Griewel, Horst-Hubert, D-4760 Werl (DE)
(74) Vertreter: Dahlmann, Gerhard, Dipl.-Ing.

(56) Entgegenhaltungen:
- EP-A- 0 069 640
- EP-A- 0 074 444
- FR-A- 1 600 361
- GB-A- 2 077 525
- GB-A- 2 081 531
- US-A- 4 234 839
- US-A- 4 347 472

## Beschreibung

Die Erfindung bezieht sich auf eine Anordnung gemäß dem Oberbegriff des Anspruches 1.

Elektrische und elektronische Geräte werden häufig aus einer elektrochemischen Energiequelle mit Spannung versorgt. Bei Geräten mit großem Strombedarf werden häufig Batterien (Akkumulatoren) eingesetzt, die durch eine Aufladung immer wieder verwendbar sind. Die bekanntesten Batteriesysteme sind der Blei-Säure-Akkumulator und die Nickel-Cadmium-Batterie.

Geräte zum Laden von Batterien sind bekannt aus dem Buch : « Batterien und Brennstoffzellen » von K. J. Euler, Seite 72 bis 84, Springer-Verlag 1982 und dem Fachbuch : « Batterien von H. A. Kiehne, Seite 182 bis 207, expert-Verlag 1980.

In der nachfolgenden Beschreibung wird sowohl die Bezeichnung Batterie als auch Akkumulator verwendet. Damit soll gemeint sein, daß die erfindungsgemäße Anordnung bei allen Arten von elektrochemischen Energiequellen einsetzbar ist. Einfachste Ladegeräte, die eine Batterie mit einem Konstantstrom aufladen, bestehen aus einem Transformator mit nachgeschaltetem Gleichrichter. Dieses Ladegerät wird für eine gewisse Zeit an die Batterie angeschaltet und soll beispielsweise über Nacht die entladene Batterie wieder füllen. Diese Normalladung ist gefahrlos, weil der Ladestrom sehr gering ist. Bei einer beschleunigten Ladung wird eine entladene Batterie innerhalb von ca. 3 Stunden durch einen erhöhten Ladestrom mit der vollen Kapazität aufgeladen. Bei der Schnelladung einer Batterie wird mit einem stark erhöhten Ladestrom gearbeitet. Allerdings ist hierbei eine laufende Kontrolle erforderlich, damit der Zelleninnendruck und die Zellentemperatur der Batterie nicht auf unzulässig hohe Werte ansteigen.

Um den Ladezustand einer Batterie festzustellen, kann man beispielsweise bei Blei-Akkumulatoren Säuredichte-Messungen vornehmen. Bekannt sind auch Messungen über Klemmenspannung, Innenwiderstand, Zellentemperatur und Zelleninnendruck, durch die auf den Ladezustand der Batterie geschlossen werden kann. Diese Verfahren sind allerdings sehr aufwendig.

Eine Anordnung, von der die Erfindung ausgeht, ist aus der EP-A-00 69 640 bekannt. Diese Anordnung besteht aus einem tragbaren Gerät, einem Dosimeter, das eine Akkumulatorenbatterie zu seiner Stromversorgung enthält. Das Gerät enthält außerdem eine Vorrichtung zur Erfassung der aus dem Akkumulator entnommenen Energiemenge und einen Ladegleichrichter mit einer Ladesteuerung. Zur Gesamtanordnung gehört ein Netzteil zur Lieferung der Energie für die Nachladung des Akkumulators. Die Energieübertragung erfolgt nach dem Transformatorprinzip.

Aus der FR-A 16 00 361 ist eine feste Notstromversorgungsanlage bekannt, welche aus einer unlösbaren Parallelschaltung einer Ladestation, eines Verbrauchernetzes und einer Akkumulatoren-Batterie besteht. Die Anordnung enthält eine Einrichtung zur Erfassung des Stromes, der in die Batterie hinein oder herausfließt. Durch Verknüpfung mitderZeitdes Stromflusses wird der jeweilige Ladezustand der Batterie ermittelt und in Abhängigkeit davon unmittelbar die Ladestation gesteuert. Eine Anregung zur Verbesserung einer Anordnung, welche ein mobiles batteriegespeistes Gerät enthält, ist daraus nicht zu entnehmen.

Aus der US-A-42 34 839 ist eine Anordnung einer Ladestation und einerdaran anschließbaren Akkumulatoren-Batterie bekannt. Die Batterie enthält einen Temperaturfühler und sendet während des Ladevorgangs fortwährend den gemessenen aktuellen Temperaturmeßwert zur Ladestation. Dies geschieht über das Ladekabel durch Überlagerung eines geeigneten Sendesignals. In der Ladestation werden die empfangenen Temperaturmeßwerte andauernd mit einem Grenzwert verglichen und bei dessen Erreichen eine Abschaltung des Ladevorganges veranlaßt.

Ausgehend von der genannten EP-A-00 69 640 liegt der Erfindung die Aufgabe zugrunde, die Anordnung zur kapazitätsabhängigen, d.h. vom Ladezustand abhängigen Nachladung eines Akkumulators dahingehend zu verbessern, daß der im mobilen Gerät anzuordnende Teil vereinfacht, zumindest verkleinert wird.

Diese Aufgabe wird bei einer Anordnung gemäß dem Oberbegriff des Anspruchs 1 durch dessen kennzeichnende Merkmale gelöst.

Die Erfassung- und Auswerteeinrichtung ist dabei so klein, daß sie gemäß kennzeichnendem Merkmal des Anspruches 3 leicht in einer batteriebetriebenen Handleuchte mit in das Leuchtengehäuse integriert werden kann. Aufgrund der erfindungsgemäßen Ausgestaltung sind die einzelnen, für die Aufladung des Akkumulators bzw. der Batterie in der Handleuchte erforderlichen Komponenten voneinander getrennt, so daß nur zwei Ladekontakte für die Nachladung der Batterie vorgesehen werden müssen. Über diese Ladekontakte fließen außer dem Ladestrom auch die Informationen überdie Zeit und Stärke des Entladestromes sowie weitere anlagenspezifische Daten.

Aufgrund des gezielt abfragbaren Ladezustandes des Akkumulators und die entsprechend einsetzbare Aufladung ist dann, wenn die Anordnung im Rahmen einer Handleuchte verwendet wird, eine derartige Handleuchte auch bei rauhem Betrieb sehr belastungsfähig und ausfallsicher, wobei die Selbstentladerate relativ gering ist und die Anordnung auch überladefest ist. Dabei kann die Ladestation mit einem Anzeigefeld ausgerüstet sein, wodurch bei Bedarf die eingestellten Daten abrufbar sind. Selbstverständlich können über das Anzeigefeld auch Defekte sowohl in der Ladestation als auch in der Handleuchte angezeigt werden.

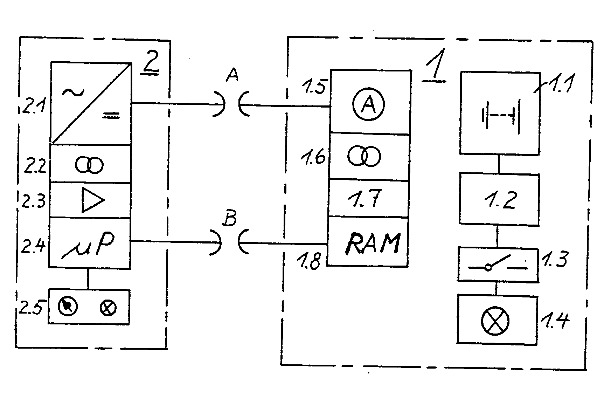

Ein Ausführungsbeispiel der erfindungsgemäßen Anordnung wird nachstehend anhand der Zeichnung näher erläutert. Dabei werden die Leitungsverbindungen innerhalb der Handleuchte und der Ladestation nicht gezeigt.

Eine batteriebetriebene Handleuchte 1 ist über zwei Ladekontakte A und B mit einer Ladestation 2 verbunden. In der Handleuchte ist eine Batterie 1.1 angeordnet, vorwiegend in Form eines gasdichten Ni/Cd-Akkumulators. Die gerätespezifische Schaltung 1.2 der Handleuchte wird aus der Batterie 1.1 mit Strom versorgt und über einen Geräteschalter 1.3 betätigt. Als Last ist eine Lampe 1.4 vorgesehen. Als Last könnte aber auch ein anderer Verbraucher, wie Elektromotor, Lüfter oder dergl. vorgesehen werden. Die gerätespezifische Schaltung 1.2 ist dabei die elektrische Anschaltung des Verbrauchers (Lampe 1.4, Elektromotor, Lüfter). Die gerätespezifische Schaltung 1.2 kann auch aus einem Blinkgeber oder einem speziellen Schalter für eine Tiefentladung bestehen. In der Handleuchte 1 ist weiterhin eine Stromerfassungsvorrichtung 1.5, ein Sende-Empfangsbaustein 1.6, eine Einrichtung 1.7 zur Batterietiefentladungserfassung und ein Speicherteil 1.8 für verschiedene Gerätefunktionen angeordnet. Die Einrichtungen 1.5 bis 1.8 sind, da sie vorwiegend aus elektronischen Bauteilen bestehen und binär arbeiten, so klein, daß sie ohne weiteres in der normalen Handleuchte 1 Platz finden und trotzdem wenig zusätzliches Gewicht erbringen.

Die Stromerfassungsvorrichtung 1.5 im Inneren der Handleuchte kann im einfachsten Fall ein Widerstand sein, dessen Spannungsabfall gemessen und ausgewertet wird. Hier und im Speicher 1.8 wird aber auch eine zeitliche Bewertung vorgenommen. Die Einrichtung 1.7 zur Erfassung der Batterietiefentladung besteht beispielsweise aus einer Anordnung elektrischer Bauelemente, wobei die Anordnung einen bestimmten Schaltzustand annimmt, wenn der Akkumulator einen unteren Wert erreicht hat. Diese Anordnung kann nur durch den Mikroprozessor 2.4 zurückgesetzt werden. Der in der Handleuchte 1 angeordnete Speicher RAM 1.8 hat die gerätespezifischen Daten der gesamten Handleuchte 1 gespeichert und gibt diese bei Bedarf auf den Mikroprozessor 2.4.

Steht die Handleuchte 1 in der Ladestation 2 und signalisiert der Speicher 1.8 eine nachlassende Batteriekapazität, so wird die Batterie 1.1 entsprechend nachgeladen.

Die Ladestation 2 besteht aus einer Spannungsversorgungsvorrichtung 2.1, einem Sende-Empfangsbaustein 2.2, einer Anordnung 2.3 zur Steuerung der Ladeströme, einer Auswerteeinrichtung 2.4 und einem Anzeigefeld 2.5. Für die Auswerteeinrichtung 2.4 der Ladestation 2 wird vorwiegend ein Mikroprozessor eingesetzt, der seine Informationen aus dem Speicherteil 1.8 der Handleuchte 1 über den Sende-Empfangsbaustein 1.6 bezieht. Die im Speicherteil 1.8 abgelegten Funktionen bestehen beispielsweise aus der Einschaltzeit der verschiedenen Lasten 1.4, aus den physikalischen Werten der Batterie 1.1 und Informationen über den Batteriezustand (Tiefentladung). Die Informationen aus dem Speicherteil 1.8 werden zyklisch in einer definierten Reihenfolge über den Sende-Empfangsbaustein 1.6 übertragen, so daß im Mikroprozessor 2.4 eine Bewertung der gemessenen Werte aus der Stromerfassung 1.5 und den Angaben aus den Speicherteil 1.8 vorgenommen werden kann. Der Sende-Baustein 1.6 der Handleuchte 1 sendet während des Übertragungsvorgangs verschiedene digitalen Informationen über die beiden Ladekontakte A und B an den Mikroprozessor 2.4, so daß der Mikroprozessor 2.4 aus der Reihenfolge der digitalen Signale den Zustand der Batterie ableiten kann. Der Mikroprozessor 2.4 steuert dabei das gesamte Ablaufprogramm. Er ist die zentrale Steuereinheit. Der Mikroprozessor 2.4 wertet alle Informationen aus und lädt bei Bedarf über die Anordnung zur Steuerung der Ladeströme 2.3 den Akkumulator 1:1 nach. Diese Steueranordnung 2.3 besteht beispielsweise aus einem vom Mikroprozessor 2.4 geregelten Sperrwandler.

Die beiden Ladekontakte A und B zwischen der Handleuchte 1 und der Ladestation 2 sind also sowohl für die strommäßige Nachladung der Batterie 1.1 wie auch für die Meßwertübertragung in beiden Richtungen zwischen Leuchte und Ladestation vorgesehen. Dies ist nur deshalb möglich, weil die Meßwert- und Befehlsimpulse aus digitalen Zeichen bestehen, die dem normalen Batterieladestrom überlagert sind.

## Patentansprüche

1. Anordnung zur kapazitätsabhängigen Nachladung eines Akkumulators (1.1), welcher sich in einem mobilen Gerät (1) befindet, das zur Nachladung des Akkumulators (1.1) mit einer Ladestation (2) gekoppelt ist, wobei das mobile Gerät (1) eine Vorrichtung zur Erfassung der aus dem Akkumulator (1.1) entnommenen Energiemenge und einen Speicher (1.8) zur Speicherung einer von einer Stromerfassungsvorrichtung (1.5) gelieferten Information über die entnommene Energiemenge und weiterer gerätespezifischer Daten enthält, dadurch gekennzeichnet, daß
a) das mobile Gerät (1) über Ladekontakte (A,B) mit der Ladestation (2) gekoppelt ist,
b) sowohl das mobile Gerät (1) als auch die Ladestation (2) einen Sendeempfangsbaustein (1.6, 2.2) für den Abruf und die Übertragung von Daten aus dem Speicher (1.8) über die Ladekontakte (A,B) zur Ladestation (2) enthält, und
c) die Ladestation (2) eine Auswerteeinrichtung (2.4) enthält, welche die abgefragten Daten auswertet und an eine Steuereinrichtung (2.3) weiterleitet, welche den Ladestrom für den Akkumulator (1.1) steuert, den eine Spannungsversorgungseinrichtung (2.1) der Ladestation (2) liefert.

2. Anordnung nach Anspruch 1, dadurch gekennzeichnet, daß der Akkumulator (1.1) eine Einrichtung (1.7) zur Erfassung einer Tiefentladung aufweist, wobei diese der Tiefentladung entsprechende Daten auf den Speicher (1.8) geführt und hierdurch die Auswerteeinrichtung (2.4) abrufbar sind.

3. Anordnung nach einem der vorstehenden Ansprüche, dadurch gekennzeichnet, daß das mobile Gerät eine Handleuchte ist.

## Claims

1. Arrangement for the capacity-dependent recharging of an accumulator (1.1) which is located in a mobile apparatus (1) which is coupled to a charging station (2) for recharging of the accumulator (1.1), the mobile apparatus (1) containing a device for detecting the energy quantity absorbed from the accumulator (1.1) and a memory (1.8) for storing information supplied from a current detection device (1.5) on the energy quantity absorbed and further apparatus-specific data, characterised in that,
a) the mobile apparatus (1) is coupled to the charging station (2) via charging contacts (A, B),
b) both the mobile apparatus (1) and the charging station (2) contain a transmitting/re- ceiving module (1.6, 2.2) for interrogating and transmitting data from the memory (1.8) via the charging contacts (A,B) to the charging station (2), and
c) the charging station (2) contains an evaluation device (2.4) which evaluates the interrogated data and passes said data on to a control device (2.3) which controls the charging current for the accumulator (1.1) which is supplied by a voltage supply device (2.2) of the charging station (2).

2. Arrangement according to Claim 1, characterised in thatthe accumulator(1.1) has a device (1.7) for detecting a deep discharge, these data which correspond to the deep discharge being passed to the memory (1.8) and it being possible to interrogate said data here by means of the evaluation device (2.4).

3. Arrangement according to one of the preceding claims, characterised in that the mobile apparatus is a hand-held light.

## Revendications

1. Dispositif pour la recharge en fonction de la capacité d'un accumulateur (1.1) installé dans un appareil mobile (1) qui, pour la recharge de l'accumulateur (1.1), est connecté à une station de recharge (2), l'appareil mobile (1) comportant un dispositif permettant de déterminer la quantité d'énergie prélevée sur l'accumulateur (1.1) ainsi qu'une mémoire (1.8) pour le stockage d'une information sur la quantité d'énergie prélevée, fournie par un dispositif (1.5) de mesure de courant, et de données autres, caractérisé par le fait que:
a) l'appareil mobile (1) est couplé à la station de recharge (2) par l'intermédiaire de contacts de charge (A, B),
b) l'appareil mobile (1) et la station de recharge (2) comportent chacun un module émission-réception (1.6, 2.2) pour l'interrogation et la transmission, par l'intermédiaire des contacts de charge (A, B), de données contenues dans la mémoire (1.8) à destination de la station de recharge (2) et,
c) la station de recharge (2) comporte un dispositif de traitement (2.4) qui exploite les données prélevées et les transmet à un dispositif de commande (2.3) qui commande le courant de charge de l'accumulateur (1.1) fourni par un dispositif d'alimentation (2.2) de la station de recharge (2).

2. Dispositif selon la revendication 1, caractérisé par le fait que l'accumulateur (1.1) comporte un dispositif (1.7) de détection d'une décharge profonde, les données correspondant à la décharge profonde étant transmises à la mémoire (1.8) et pouvant y être recherchées par le dispositif de traitement (2.4).

3. Dispositif selon l'une des revendications précédentes, caractérisé par le fait que l'appareil mobile est une lampe portative.
